# EUROPÄISCHE PATENTSCHRIFT

(11) **EP 2 686 205 B1**
(45) Veröffentlichungstag und Bekanntmachung des Hinweises auf die Patenterteilung: **09.03.2016**
(21) Anmeldenummer: 12709606.3
(22) Anmeldetag: 13.03.2012
(51) Int. Cl.: B60R 19/04

(54) **STOSSFÄNGER EINES KRAFTFAHRZEUGS MIT EINER TRÄGERSTRUKTUR**
BUMPER OF A MOTOR VEHICLE WITH A SUPPORT STRUCTURE
PARE-CHOCS DE VÉHICULE AUTOMOBILE DOTÉ D'UNE STRUCTURE DE SUPPORT

(30) Priorität: 17.03.2011 DE 102011005687
(43) Veröffentlichungstag der Anmeldung: 22.01.2014
(73) Patentinhaber: Bayerische Motoren Werke Aktiengesellschaft, 80809 München (DE)
(72) Erfinder: RIEDL, Wilhelm, 85276 Pfaffenhofen (DE); KÖHLER, Uwe, 85241 Hebertshausen (DE); KOESTLER, Ulrich, 85241 Hebertshausen (DE)
(86) Internationale Anmeldenummer: PCT/EP2012/054399
(87) Internationale Veröffentlichungsnummer: WO 2012/123459

(56) Entgegenhaltungen:
- EP-A1- 1 342 625
- EP-A1- 2 156 990
- EP-A1- 2 248 687
- DE-A1- 10 223 674

## Beschreibung

Die Erfindung betrifft einen Stoßfänger eines Kraftfahrzeugs mit einer Trägerstruktur nach dem Oberbegriff des Patentanspruchs 1.

Aus der US 4,130,312 ist bereits ein Stoßfänger eines Kraftfahrzeugs mit einer Trägerstruktur bekannt, die einen sich hauptsächlich in Fahrzeugquerrichtung erstreckenden Stoßfängerquerträger umfasst. Der Stoßfängerquerträger ist unterteilt in einen mittleren Abschnitt und zwei seitliche Abschnitte, die lösbar miteinander verbunden sind.

Die DE 10223674 offenbart einen Stoßfänger eines Kraftfahrzeugs gemäß dem Oberbegriff des Anspruch 1.

Aufgabe der Erfindung ist es, einen Stoßfänger eines Kraftfahrzeugs mit einer Trägerstruktur zu schaffen, die geometrisch und funktional gut für unterschiedliche Derivate des Kraftfahrzeugs skalierbar ist.

Diese Aufgabe wird mit einem Stoßfänger eines Kraftfahrzeugs mit einer Trägerstruktur mit den Merkmalen des Patentanspruchs 1 gelöst.

Erfindungsgemäß umfasst die Trägerstruktur des Stoßfängers einen sich hauptsächlich in Fahrzeugquerrichtung erstreckenden Stoßfängerquerträger sowie zwei zueinander parallele, sich in Fahrzeuglängsrichtung erstreckende Stoßfängerlängsträger. Dabei sind die Stoßfängerlängsträger jeweils mit einem Endabschnitt an dem Endbereich eines Längsträgers der Karosserie des Kraftfahrzeugs angebracht. Mit dem anderen Endabschnitt halten sie den Stoßfängerquerträger, sodass dieser unterteilt ist In zwei seitliche Abschnitte und einen mittleren Abschnitt zwischen den beiden Stoßfängerlängsträgern. Jeweils ein Stoßfängerlängsträger und ein seitlicher Abschnitt des Stoßfängerquerträgers bestehen einstückig aus einem Strangpressprofil. Vorteilhafterweise sind der mittlere Abschnitt des Stoßfängerquerträgers und die beiden seitlichen Abschnitten des Stoßfängerquerträgers lösbar miteinander verbunden. Bevorzugt ist der mittleren Abschnitt in Fahrzeughöhenrichtung z gesehen in zumindest zwei unterschiedlichen Positionen mit den seitlichen Abschnitten verbindbar. Günstigerweise sind die beiden Stoßfängerlängsträger in Fahrzeuglängsrichtung x gesehen in zumindest zwei unterschiedlichen Positionen mit den Endbereichen der Längsträger verbindbar.

Der erfindungsgemäße Stoßfänger ist geometrisch und funktional gut skalierbar, sodass er leicht an verschiedene Derivate eines Kraftfahrzeugs adaptierbar ist. Derivate eines Kraftfahrzeugs können beispielsweise sein eine Limousine, ein Fahrzeug der Kombinationsbauart, ein Cabrio und ein Coupé dergleichen Baureihe. Abweichungen in Fahrzeuglängsrichtung x zwischen einzelnen Derivaten können durch die Stoßfängerlängsträger ausgeglichen werden. Dazu können beispielsweise die Stoßfängerlängsträger, die aus dem Strangpressprofil bestehen, unterschiedlich lang abgeschnitten werden. Alternativ können die Stoßfängerlängsträger einen Überlappungsbereich mit den Längsträgern der Karosserie bilden. Dieser Überlappungsbereich kann dann in Fahrzeuglängsrichtung x unterschiedlich groß ausfallen. Wenn die Stoßfängerlängsträger zum Beispiel formschlüssig in die Längsträger der Karosserie eingeschoben sind, kann die Einschubtiefe variieren.

Das Mittelteil des Stoßfängers kann unterschiedliche Fahrzeughöhen z der Derivate ausgleichen, indem es in unterschiedlichen Höhen mit den seitlichen Abschnitten des Stoßfängers verbindbar ist Auch kann das Mittelteil unterschiedlich breit in Fahrzeugquerrichtung y dimensioniert werden, sodass bei unterschiedlichen Abständen der Längsträger der Karosserie in Fahrzeugquerrichtung y nur das Mittelteil adaptiert werden muss. Zudem kann das Mittelteil funktional über eine entsprechende Materialauswahl, entsprechende Materialgüten und Dicken skallert werden. Auch die Seitenteile können durch Materialdicken und Materialgüten funktional skaliert werden. So kann der Stoßfänger leicht an unterschiedliche Derivate eines Fahrzeugs oder aber an unterschiedliche Anforderungsprofile beispielsweise für Europa und den nordamerikanischen Raum adaptiert werden.

Durch unterschiedliche Varianten der Mittelteile und der seitlichen Abschnitte sowie den unterschiedlichen Möglichkeiten, die Bauteile miteinander und mit den Längsträgern der Karosserie zu verbinden, lässt sich ein einfacher Baukasten zur Adaption an die jeweiligen Anforderungen schaffen. Dieser Baukasten reduziert die erforderlichen Aufwendungen für Entwicklung, Herstellung, Werkzeugkosten und Absischerung der unterschiedlichen Trägerstrukturen für die Stoßfänger. Auch das Gewicht des Stoßfängers lässt sich durch die flexiblen Skalierungsmöglichkeiten in der Funktion, Material und Geometrie optimieren. Die Transport-, Montage- und Logistikkosten lassen sich aufgrund der relativ kleinen Einzelteile gegenüber einem einteiligen Stoßfängerquerträger reduzieren.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen In schematischer Darstellungsweise:
- Fig. 1: eine Explosionsdarstellung eines erfindungsgemäßen Stoßfängers und
- Fig. 2: eine perspektivische Detailansicht des Stoßfängers.

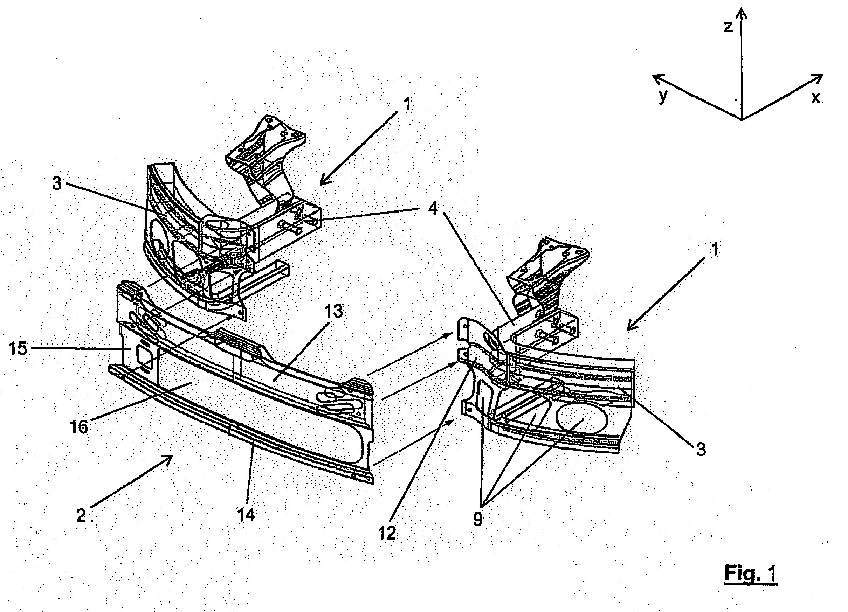

In Fig. 1 ist eine Trägerstruktur eines Stoßfängers eines Personenkraftfahrzeugs dargestellt, die aus zwei bearbeiteten seitlichen Strangpressprofilen 1 und einem bearbeiteten mittleren Strangpressprofil 2 besteht, die miteinander verschraubt sind. Beide seitlichen Strangpressprofile 1 bilden einteilig zugleich einen Stoßfängerlängsträger 4 und die seitlichen Abschnitte 3 eines Stoßfängerquerträgers. Die Stoßfängerlängsträger 4 erstrecken sich in Fahrzeuglängsrichtung x. Die Querschnittsform ist so gewählt, dass sie jeweils formschlüssig in die Endbereiche der Längsträger der Karosserie eingeschoben und dort mit diesen in Fahrzeugquerrichtung y mit drei Schrauben verschraubbar sind. Zugleich bilden die beiden Strangpressprofile 1 jeweils einen seitlichen Abschnitt 3 des Stoßfängerquerträgers. Dieser verläuft primär in Fahrzeugquerrichtung y und setzt sich zusammen aus den seitlichen Abschnitten 3 und dem mittleren Strangpressprofil 2.

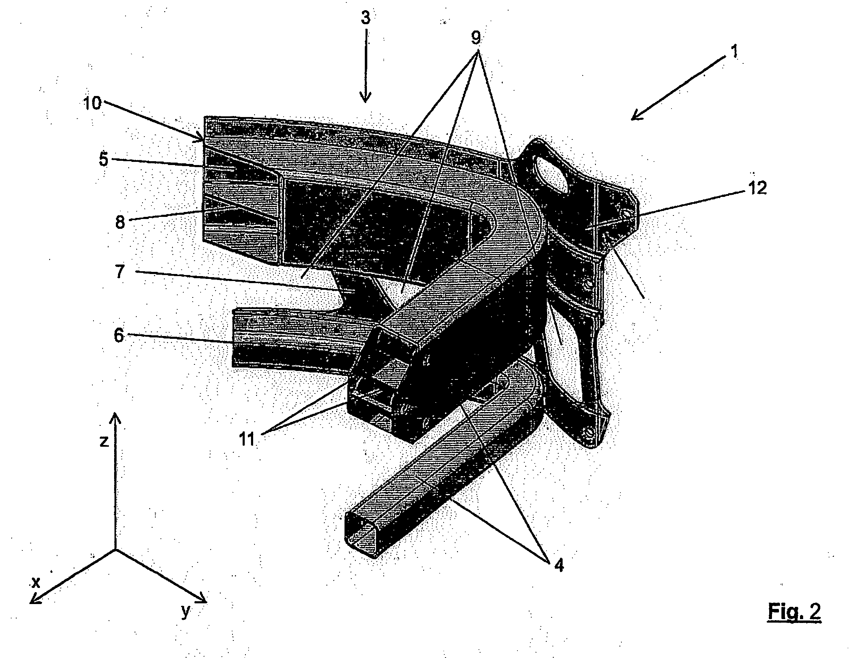

In Fig. 2 ist eine vergrößerte, perspektivische Ansicht eines seitlichen Strangpress-profils 1 gezeigt. Dabei ist gut erkennbar, dass das Strangpressprofil 1 aus einer oberen, geschlossenen Hohlkammer 5 und einer unteren, geschlossenen Hohlkammer 6 besteht, die über einen Steg 7 miteinander verbunden sind. Die obere Hohlkammer 5 ist dabei durch eine waagrechte Querwand 8 in zwei übereinander angrenzende Hohlräume unterteilt. Im Bereich des seitlichen Abschnitts 4 des Stoßfängerquerträgers bildet dabei die obere Hohlkammer 5 einen oberen Lastpfad und die untere Hohlkammer 6 einen unteren Lastpfad des Stoßfängerquerträgers. Dabei ist die Querschnittsfläche der oberen Hohlkammer 5 mehr als doppelt so groß wie die Querschnittsfläche der unteren Hohlkammer 6, da der obere Lastpfad wesentlich höhere Kräfte aufnehmen können muss.

Im Bereich des seitlichen Abschnitts 3 des Stoßfängerquerträgers weist zudem der Steg 7, der die obere Hohlkammer 5 mit der unteren Hohlkammer 6 verbindet, zahlreiche Aussparungen 9 auf, um das Gewicht zu reduzieren. Am seitlichen Ende 10 des Stoßfängerquerträgers ist die obere Hohlkammer 5 schräg beschnitten.

Zur Fahrzeugmitte hin ist das Strangpressprofil 1 stark umgebogen, sodass es neben dem seitlichen Abschnitt 3 des Stoßfängerquerträgers einteilig zudem einen Stoßfängerlängsträger 4 bildet, der sich in Fahrzeuglängsrichtung x erstreckt Dabei kann die obere Hohlkammer 5 formschlüssig in einen Endbereich eines Längsträgers der Karosserie des Personenkraftfahrzeugs eingeschoben werden und dort über drei sich in Fahrzeugquerrichtung y erstreckende Schrauben fixiert werden. Dazu sind in den Endabschnitt der oberen Hohlkammer 5 drei Buchsen 11 eingebracht, die sich in der Hohlkammer 5 In Fahrzeugrichtung y über die gesamte Breite erstrecken und so verhindern, dass beim Verschrauben die obere Hohlkammer 5 in Fahrzeugquerrichtung y zusammengedrückt wird. Die untere Hohlkammer 6 bildet eine untere Abstützung des Stoßfängers in Fahrzeuglängsrichtung x an einem unteren Längsträger oder an einem Achsträger der Karosserie des Kraftfahrzeugs.

Im Bereich des Stoßfängerlängsträgers 4 sind die obere Hohlkammer 5 und die untere Hohlkammer 6 nicht mehr miteinander durch den Steg 7 verbunden. Stattdessen weist das seitliche Strangpressprofil 1 einen Einschnitt in Längsrichtung des Strangpressprofils auf, sodass der Steg 7 losgelöst von den beiden Hohlkammern 5 und 6 zur Fahrzeugmitte hin gebogen sein kann. Dieser zur Fahrzeugmitte hin gebogene Abschnitt 12 des Stegs 7 dient zur Verbindung des seitlichen Abschnitts 3 des Stoßfängerquerträgers mit dem mittleren Strangpressprofil 2, das den mittleren Abschnitt des Stoßfängerquerträgers bildet. Dabei bilden die zur Fahrzeugmitte hin gebogenen Abschnitte 12 der Stege 7 der seitlichen Strangpressprofile 1 jeweils einen Überlappungsbereich mit dem mittleren Strangpressprofil 2, in dem sie miteinander verschraubt sind, wie es In der Fig. 1 gut erkennbar ist.

Das mittlere Strangpressprofil 2 weist ebenfalls eine obere Hohlkammer 13 und eine untere Hohlkammer 14 auf, die ebenfalls über einen Steg 15 miteinander verbunden sind. Diese Hohlkammern 13 und 14 bilden den oberen und unteren Lastpfad des Stoßfängerquerträgers im mittleren Bereich. Auch hier ist die Querschnittsfläche der oberen Hohlkammer 13 mehr als doppelt so groß wie die Querschnittsfläche der unteren Hohlkammer 14. Der Steg 15 weist eine sehr große Aussparung 16 zur Gewichtsreduzierung auf.

Um das Gewicht der Trägerstruktur des Stoßfängers insgesamt so gering wie möglich zu halten, bestehen beide Strangpressprofile 1 und 2 aus einem Leichtmetallwerkstoff. Insbesondere eigenen sich hier Aluminiumlegierungen, da sich diese gut zum Strangpressen eignen und auch die Materialkosten relativ gering sind.

Die erfindungsgemäße Aufteilung der Trägerstruktur des Stoßfängers in zwei seitliche Strangpressprofile 1 und ein mittleres Strangpressprofil 2 bietet gute Möglichkeiten zur Adaption an unterschiedliche Fahrzeugderivate und / oder Anforderungsprofile. So können die Stoßfängerlängsträger 4 leicht in ihrer Länge in Fahrzeuglängsrichtung x variiert werden. Dazu können entweder die seitlichen Strangpressprofile 1. in den Bereichen, die die Stoßfängerlängsträger 4 bilden, unerschiedlich lang abgeschnitten werden, oder die Stoßfängerlängsträger 4 werden unterschiedlich weit in die Längsträger der Karosserie eingeschoben. Auf diese Weise können unterschiedliche Maße zwischen den Endbereichen der Längsträger der Karosserie und dem Stoßfängerlängsträger ausgeglichen werden. In Fahrzeugquerrichtung y unterschiedlich breite Stoßfängerquerträger lassen sich durch unterschiedlich lang gehaltene, mittlere Strangpressprofile 2 auf einfache Weise darstellen, ohne dass die seitlichen Strangpressprofile 1 verändert werden müssen. Auch Varianten mit unterschiedlichen Fahrzeughöhen z lassen sich problemlos adaptieren. Dazu kann das mittlere Strangpressprofil 2 in unterschiedlichen Höhen mit den beiden seitlichen Strangpressprofilen verschraubt werden. So lassen sich Varianten in allen Fahrzeugrichtungen auf einfache Weise darstellen.

## Patentansprüche

1. Stoßfänger eines Kraftfahrzeugs mit einer Trägerstruktur, die einen sich hauptsächlich in Fahrzeugquerrichtung (y) erstreckenden Stoßfängerquerträger sowie zwei zueinander parallele, sich in Fahrzeuglängsrichtung (x) erstreckende Stoßfängerlängsträger (4) umfasst, wobei die Stoßfängerlängsträger (4) jeweils mit einem Endabschnitt an dem Endbereich eines Längsträgers der Karosserie des Kraftfahrzeugs angebracht sind und mit dem anderen Endabschnitt den Stoßfängerquerträger halten, sodass dieser unterteilt ist in zwei seitliche Abschnitte (3) und einen mittleren Abschnitt (2) zwischen den beiden Stoßfängerlängsträgern (4), **dadurch gekennzeichnet, dass** jeweils ein Stoßfängerlängsträger (4) und ein seitlicher Abschnitt (3) des Stoßfängerquerträgers einstückig aus einem Strangpressprofil bestehen, wobei der Stoßfängerquerträger einen oberen und einen unteren Lastpfad aufweist, und sowohl der obere Lastpfad als auch der untere Lastpfad des Stoßfängerquerträgers jeweils durch ein geschlossenes Hohlprofil (5, 6, 13, 14) dargestellt ist, wobei das Hohlprofil für den oberen Lastpfad (5) eine mehr als doppelt so große Querschnittsfläche als das Hohlprofil (6) für den unteren Lastpfad aufweist.

2. Stoßfänger nach Anspruch 1, **dadurch gekennzeichnet, dass** der mittlere Abschnitt (2) des Stoßfängerquerträgers mit den beiden seitlichen Abschnitten (3) des Stoßfängerquerträgers lösbar verbunden ist.

3. Stoßfänger nach Anspruch 1 oder 2, **dadurch gekennzeichnet, dass** der mittlere Abschnitt (2) in Fahrzeughöhenrichtung (z) gesehen in zumindest zwei unterschiedlichen Positionen mit den seitlichen Abschnitten (3) verbindbar ist.

4. Stoßfänger nach einem der vorhergehenden Ansprüche, **dadurch gekennzeichnet, dass** das Strangpressprofil (1) Beschnitte und / oder Aussparungen (9) aufweist.

5. Stoßfänger nach einem der vorhergehenden Ansprüche, **dadurch gekennzeichnet, dass** das Strangpressprofil (1) Einschnitte aufweist.

6. Stoßfänger nach Anspruch 5, **dadurch gekennzeichnet, dass** zwei durch einen Beschnitt voneinander getrennte Abschnitte des Strangpressprofils (1) unterschiedlich gebogen sind.

7. Stoßfänger nach einem der vorhergehenden Ansprüche, **dadurch gekennzeichnet, dass** der mittlere Abschnitt (2) des Stoßfängerquerträgers aus einem Strangpressprofil besteht.

8. Stoßfänger nach einem der vorhergehenden Ansprüche, **dadurch gekennzeichnet, dass** das Strangpressprofil (1) aus einem Leichtmetallwerkstoff besteht.

9. Stoßfänger nach einem der vorhergehenden Ansprüche, **dadurch gekennzeichnet, dass** die Stoßfängerlängsträger (4) in Fahrzeuglängsrichtung (x) gesehen in zumindest zwei unterschiedlichen Positionen mit den Endbereichen der Längsträger verbindbar sind.

## Claims

1. A bumper of a motor vehicle having a support structure which comprises a bumper cross member, extending mainly in the transverse direction (y) of the vehicle as well as two mutually parallel bumper side members (4), extending in the longitudinal direction (x) of the vehicle, wherein the bumper side members (4) are attached in each case by an end portion to the end region of a side member of the body of the motor vehicle and they hold the bumper cross member by their other end portion so that the cross member is divided into two side portions (3) and a centre portion (2) between the two bumper side members (4), **characterised in that** a respective bumper side member (4) and a side portion (3) of the bumper cross member integrally comprise an extruded profile, wherein the bumper cross member has an upper load path and a lower load path, and both the upper load path and the lower load path of the bumper cross member are respectively presented by a closed hollow profile (5, 6, 13, 14), wherein the hollow profile for the upper load path (5) has more than double the cross-sectional area than the hollow profile (6) for the lower load path.

2. A bumper according to claim 1, **characterised in that** the centre portion (2) of the bumper cross member is releasably connected to the two side portions (3) of the bumper cross member.

3. A bumper according to claim 1 or claim 2, **characterised in that**, seen in the vertical direction (z) of the vehicle, the centre portion (2) can be connected to the side portions (3) in at least two different positions.

4. A bumper according to any one of the preceding claims, **characterised in that** the extruded profile (1) has cuts and/or openings (9).

5. A bumper according to any one of the preceding claims, **characterised in that** the extruded profile (1) has incisions.

6. A bumper according to claim 5, **characterised in that** two portions of the extruded profile (1), separated from one another by a cut are curved in different ways.

7. A bumper according to any one of the preceding claims, **characterised in that** the centre portion (2) of the bumper cross member comprise an extruded profile.

8. A bumper according to any one of the preceding claims, **characterised in that** the extruded profile (1) comprise a light metal material.

9. A bumper according to any one of the preceding claims, **characterised in that**, seen in the longitudinal direction (x) of the vehicle, the bumper side members (4) can be connected to the end regions of the side members in at least two different positions.

## Revendications

1. Pare-choc de véhicule comprenant une structure support qui comprend un support transversal de pare-choc s'étendant principalement dans la direction transversale (y) du véhicule ainsi que deux supports longitudinaux de pare-choc (4) parallèles s'étendant la direction longitudinale (x) du véhicule, les supports longitudinaux de pare-choc (4) étant respectivement montés par un segment d'extrémité sur la zone d'extrémité d'un support longitudinal de la carrosserie du véhicule et maintenant le support transversal de pare-choc par l'autre segment d'extrémité, de sorte que celui-ci soit subdivisé en deux segments latéraux (3) et un segment médian (2) entre les deux supports longitudinaux (4) de pare-choc,
**caractérisé en ce qu'**
un support longitudinal de pare-choc (4) et un segment latéral (3) du support transversal de pare-choc sont respectivement réalisés en une seule pièce à partir d'un profilé extrudé,
le support transversal de pare-choc comprenant un chemin de charge supérieur et un chemin de charge inférieur, et le chemin de charge supérieur ainsi que le chemin de charge inférieur du support transversal de pare-choc étant respectivement définis par un profilé creux fermé (5, 6, 13, 14), le profilé creux pour le chemin de charge supérieur (5) ayant une surface de section transversale plus de deux fois supérieure à celle du profilé creux (6) pour le chemin de charge inférieur.

2. Pare-choc conforme à la revendication 1,
**caractérisé en ce que**
le segment médian (2) du support transversal de pare-choc est relié de façon amovible avec les deux segments latéraux (3) du support transversal de pare-choc.

3. Pare-choc conforme à la revendication 1 ou 2,
**caractérisé en ce que**
dans la direction (z) de la hauteur du véhicule, le segment médian (2) peut être relié aux segments latéraux (3) dans au moins deux positions différentes.

4. Pare-choc conforme à l'une des revendications précédentes,
**caractérisé en ce que**
le profilé extrudé (1) comporte des découpages et/ou des évidements (9).

5. Pare-choc conforme à l'une des revendications précédentes,
**caractérisé en ce que**
le profilé extrudé (1) comporte des encoches.

6. Pare-choc conforme à la revendication 5,
**caractérisé en ce que**
deux segments du profilé extrudé (1) séparés l'un de l'autre par une découpe sont différemment recourbés.

7. Pare-choc conforme à l'une des revendications précédentes,
**caractérisé en ce que**
le segment médian (2) du support transversal de pare-choc est constitué par un profilé extrudé.

8. Pare-choc conforme à l'une des revendications précédentes,
**caractérisé en ce que**
le profilé extrudé (1) est réalisé en un métal léger.

9. Pare-choc conforme à l'une des revendications précédentes,
**caractérisé en ce que**
dans la direction longitudinale (x) du véhicule le support longitudinal de pare-choc (4) peut être relié, aux zones d'extrémité du support longitudinal dans au moins deux positions différentes.
